# FASCICULE DE BREVET EUROPEEN

(11) **EP 0 228 933 B1**
(45) Date de publication et mention de la délivrance du brevet: **25.08.1993**
(21) Numéro de dépôt: 86402624.0
(22) Date de dépôt: 26.11.1986
(51) Int. Cl.: H01J 47/02, H01J 47/06, H01J 47/12, G01T 1/29

(54) **Dispositif de détection et de localisation de particules neutres, et application**
Vorrichtung zur Wahrnehmung und Lokalisierung von neutralen Partikeln und deren Anwendung
Neutral particles detection and situating device, and its use

(30) Priorité: 04.12.1985 FR 8517915
(43) Date de publication de la demande: 15.07.1987
(60) Demande divisionnaire: 92400285.0
(73) Titulaire: SCHLUMBERGER INDUSTRIES, F-92120 Montrouge (FR)
(72) Inventeur: Ruscev, Mario, F-92130 Issy-Les-Moulineaux (FR); Dorion, Irène, F-75004 Paris (FR); Lilot, Alain Pierre, B-4020 Liège (BE)
(74) Mandataire: Dupont, Henri

(56) Documents cités:
- FR-A- 2 503 381
- GB-A- 1 578 325
- GB-A- 2 000 632
- REVIEW OF SCIENTIFIC INSTRUMENTS, vol. 50, no. 5, mai 1979, pages 577-581, American Institute of Physics, New York, US; N.J. SCHEVCHIK et al.: "High pass photocathode x-ray ionization chamber for surface EXAFS"
- IEEE TRANSACTIONS ON NUCLEAR SCIENCE, vol. NS-27, no. 1, février 1980, pages 157-165, New York, US; G.K. LUM et al.: "Lead oxide glass tubing converters for gamma detection in MWPC"

## Description

La présente invention concerne un dispositif de détection et de localisation de particules neutres, telles que photons X, photons gamma ou neutrons, comprenant au moins un capteur adoptant la forme d'une enceinte remplie de gaz et perméable aux particules neutres, dans laquelle sont prévus au moins d'une part un convertisseur capable, sous l'impact de particules neutres, d'émettre des particules ionisantes donnant naissance, par ionisation du gaz, à des particules chargées, et d'autre part un organe de détection électriquement polarisé par rapport à ce convertisseur de manière à attirer ces particules chargées avec une force permettant l'apparition d'un phénomène d'avalanche.

Un dispositif connu de ce type est décrit dans le brevet britannique GB 2 000 632.

Dans leur forme de réalisation la plus simple, les dispositifs de détection de particules neutres comprennent une cathode jouant le rôle de convertisseur et un fil anodique, la cathode et le fil anodique étant disposés au voisinage l'un l'autre, et l'ensemble étant contenu dans une enceinte remplie de gaz.

Un exemple de détecteur présentant une telle structure est donné dans l'article page 577 de la "Review of Scientific Instruments", vol.50, No 5 (1979).

Quel que soit le mode de fonctionnement de ces détecteurs, le convertisseur dont ils sont dotés a pour fonction, sous l'impact des particules neutres, d'émettre des particules ionisantes et, plus spécifiquement des électrons rapides, dits primaires; l'énergie cinétique de ces électrons primaires est supérieure à l'énergie d'ionisation des atomes ou des molécules de gaz, et parfois si élevée que ces électrons ne peuvent être efficacement guidés vers l'anode par le champ électrique régnant dans l'enceinte.

En revanche, ces électrons primaires créent, par ionisation du gaz, des paires électrons-ions positifs, les électrons ainsi crées, dits "secondaires", migrant vers l'anode tandis que les ions positifs migrent vers la cathode.

Une charge électrique dépendant du nombre d'électrons secondaires est ainsi collectée à l'anode; un circuit (ou "canal") approprié, relié à l'anode, délivre un signal de mesure proportionnel à la charge électrique recueillie sur cette dernière, et par conséquent représentatif de l'énergie ou de l'intensité du phénomène observé.

De façon classique, la détection des charges collectées peut être effectuée directement ou indirectement; dans ce dernier cas, les charges électriques sont autorisées à circuler dans un conducteur et la détection consiste en une détection du courant électrique ainsi produit.

En dehors de ces caractéristiques communes, les détecteurs de particules neutres présentent une très grande diversité, et sont généralement classés en deux types principaux, selon qu'ils exploitent, ou non, le phénomène dit "avalanche de Townsend".

Ce phénomène, bien connu de l'homme de l'art, apparaît lorsque le champ électrique au voisinage de l'anode est assez intense pour donner aux électrons secondaires une accélération telle que l'énergie cinétique qu'ils acquièrent entre deux collisions devienne supérieure à l'énergie d'ionisation des atomes ou des molécules de gaz.

Dans ces conditions, ces électrons secondaires peuvent à leur tour créer d'autres électrons secondaires qui eux-mêmes, tout en se rapprochant de l'anode, participent au phénomène d'avalanche, ce dernier ne cessant que lorsque tous les électrons libres ont été collectés par l'anode.

Cet effet de multiplication des électrons peut conduire à une amplification significative du signal de mesure améliorant très sensiblement le rapport signal/bruit.

En effet, sous de bonnes conditions, le rapport du nombre d'électrons secondaires collectés à l'anode au nombre d'électrons secondaires de la première génération, qui est égal à 1 dans les chambres d'ionisation, peut atteindre une valeur très élevée, par exemple 10⁷, dans les détecteurs dits "compteurs proportionnels" utilisant le phénomène d'avalanche.

Néanmoins, le facteur de multiplication résultant du phénomène d'avalanche ne peut être contrôlé qu'avec une précision limitée, et il convient, pour certaines applications, de réaliser des détecteurs qui ne fassent pas intervenir le phénomène d'avalanche. C'est en particulier le cas des détecteurs dits "chambres d'ionisation", dont l'article de la "Review of Scientific Instruments" précédemment cité, le brevet britannique GB 1 578 325, et le brevet français FR 2 503 381 donnent des exemples, et qui permettant généralement la détection de radiations dans des conditions métrologiques, sous réserve cependant que la charge accumulée sur l'anode soit mesurable, ce qui suppose soit que le rayonnement de particules neutres soit intense, soit que la durée de la mesure soit importante.

C'est pourquoi les chambres d'ionisation ne peuvent être appliquées à l'imagerie, ou à la localisation de particules, que dans des conditions très particulières de rayonnement, et si notamment l'énergie du rayonnement à détecter est de l'ordre de 80 keV, ou plutôt inférieure à cette valeur. De plus, l'application de chambres d'ionisation à l'imagerie conduit à des dispositifs complexes, chaque chambre ne fournissant qu'un point (ou "pixel") de l'image, comme le montre le brevet français FR 2 503 381.

Sensiblement mieux adaptés que les chambres d'ionisation à ces applications, les détecteurs à avalanche sont bien connus de l'homme de l'art dans le domaine de l'imagerie et de la localisation de particules.

Un exemple de compteur proportionnel appliqué à l'acquisition d'images bidimensionnelles est donné dans l'article page 157 de "IEEE Transactions on Nuclear Science", vol. 27, No 1 (Février 1980).

Ce détecteur comprend un réseau bidimensionnel de fils anodiques associé à des faisceaux de tubes de cristal à l'oxyde de plomb jouant le rôle de convertisseurs et disposés perpendiculairement au plan du réseau anodique. L'angle d'incidence du rayonnement de particules neutres sur le détecteur est voisin de 90° et l'efficacité de conversion de ce détecteur, d'ailleurs assez peu dépendante de l'angle d'incidence, reste inférieure à 8%.

Un autre compteur proportionnel permettant l'acquisition directe d'images bidimensionnelles est décrit dans le brevet britannique GB 2 000 632. Ce dispositif, qui, comme le précédent, appartient à la classe d'appareils connus sous le nom de chambres proportionnelles multifils, est destiné à détecter un rayonnement l'irradiant sous une incidence perpendiculaire à son plan, et comprend deux cathodes formées de bandes, constituant des convertisseurs solides, et une anode constituée d'un plan de fils électriquement reliés les uns aux autres.

Les bandes cathodiques sont associées à des lignes à retard elles-mêmes reliées à un circuit d'analyse temporel.

Outre le fait que ce détecteur exige le recours à un circuit d'analyse complexe, et le fait que son efficacité de conversion ne peut être élevée, il conduit nécessairement à des temps d'acquisition d'image assez longs, qui en limite l'application à la formation d'images quasi-statiques, par exemple à la scintigraphie.

Dans ce contexte, le but essentiel de l'invention est de proposer un dispositif de détection et de localisation de particules neutres dont l'efficacité soit sensiblement supérieure à celle des chambres proportionnelles multifils connues en particulier lorsque l'énergie des particules neutres dépasse sensiblement 50 kev.

A cette fin, le dispositif de l'invention, pour la détection et la localisation de particules neutres, telles que photons X, photons gamma ou neutrons, appartenant à un flux émis par une source, et se propageant autour d'une direction moyenne dans un angle solide d'ouverture limitée par un collimateur, ce dispositif comprenant au moins un capteur comportant au moins lui-même :
- un convertisseur propre à émettre des particules ionisantes sous l'impact des particules neutres qu'il reçoit, ce convertisseur étant constitué d'un matériau solide et s'étendant dans un plan;
- un gaz environnant le convertisseur, propre à donner naissance à des charges électriques lorsqu'il est traversé par des particules ionisantes;
- des moyens de détection, comprenant des conducteurs allongés de collectage de charges sensiblement parallèles les uns aux autres, arrangés en un réseau sensiblement plan et parallèle au plan du convertisseur, et propres à recueillir les charges créées par ionisation stimulée;
- des moyens de polarisation pour appliquer une différence de potentiel entre le convertisseur et les conducteurs allongés en vue de réaliser une multiplication des charges par leur accélération dans le champ ainsi engendré, conduisant à une ionisation stimulée du gaz;
- une enceinte, perméable aux particules neutres et renfermant le convertisseur, le gaz, et les moyens de détection; et
- des circuits électroniques reliés aux conducteurs allongés de collectage de charges pour produire une image représentative de la répartition des charges sur les conducteurs allongés de collectage auxquels ces circuits sont reliés,
caractérisé en ce que le collimateur restreint le faisceau de particules reçues de la source à un faisceau en nappe centré sur ladite direction moyenne de propagation, en ce que le plan du convertisseur fait avec cette direction moyenne de propagation un angle (alpha) inférieur à 10°, en ce que lesdits conducteurs de collectage de charges sont sensiblement parallèles à la projection de ladite direction moyenne de propagation sur le plan du convertisseur, en ce que lesdits circuits électroniques sont indépendants les uns des autres et en ce que chacun desdits circuits électroniques est relié à une conducteur de collectage de charges respectif ou à un couple respectif de conducteurs de collectage de charges situés de part et d'autre du plan du convertisseur et au droit l'un de l'autre par rapport à ce plan et sert à former l'un des pixels d'une rangée de pixels constituant une image unidimensionnelle représentative de la répartition d'intensité du flux de particules neutres suivants une direction, parallèle au plan du convertisseur et perpendiculaire à ladite direction moyenne de propagation des particules neutres.

Le dispositif de l'invention est également caractérisé en ce que le collimateur restreint le faisceau de particules reçues de la source à un faisceau en nappe centré sur ladite direction moyenne de propagation, en ce que le plan du convertisseur fait avec cette direction moyenne de propagation un angle (alpha) inférieur à 10°, en ce que lesdits conducteurs de collectage de charges sont résistifs, sensiblement perpendiculaires à la projection de ladite direction moyenne de propagation sur le plan du convertisseur et reliés par leurs extrémités à deux circuits électroniques respectifs auxquels ils fournissent des courants respectifs permettant à ces circuits, de façon connue en soi, la localisation des charges le long de ces conducteurs de collectage de charges, ladite image étant alors constituée par une image unidimensionnelle représentative de la répartition d'intensité du flux de particules neutres suivant une direction parallèle au plan du convertisseur et perpendiculaire à ladite direction moyenne de propagation des particules neutres.

L'une des originalités essentielles de l'invention réside dans le fait qu'elle propose un capteur qui, tout en présentant une structure simple et adaptée à une réalisation industrielle, combine, en vue d'une application de localisation de particules, les qualités propres des chambres proportionnelles et les avantages, connus ou mis en évidence à l'occasion de l'invention, liés à l'utilisation, en incidence à l'occasion de l'invention, liés à l'utilisation, en incidence rasante, d'un convertisseur solide.

En effet, alors que l'homme de l'art dans le domaine de la localisation de particules et de l'imagerie, a pour habitude soit, comme le montrent les brevets FR 2 503 381 et GB 1 578 325, d'associer chaque pixel d'image à un détecteur, lorsque ce détecteur est une chambre d'ionisation, soit, comme le montrent le brevet GB 2 000 632 et l'article de la revue "IEEE Transactions ou Nuclear Science" précédemment mentionnée, de former l'image dans un plan sensiblement perpendiculaire à la direction de propagation des particules à localiser, en affectant chaque fil ou bande anodique à toute une rangée (ligne ou colonne) de pixel d'image, la présente invention propose, dans un détectgeur à avalanche, de former une image dans un plan d'incidence rasante par rapport à la direction de propagation des particules, et d'associer à une rangée de pixels tout un ensemble d'éléments de détectgion de forme allongée (fils ou bandes).

La résolution du détecteur de l'invention est optimale si les éléments de détection de forme allongée sont des fils électriquement isolés les uns des autres et tendus parallèlement à la projection, sur la plaque du convertisseur, de la direction moyenne de propagation des particules.

Chaque fils est alors relié à un circuit électronique de détection de charge séparé (encore appelé canal), l'image unidimensionnelle étant formée par l'ensemble des signaux de sortie de ces circuits.

Ces circuits (ou "canaux") électroniques, connus en eux-mêmes, peuvent par exemple être du type de ceux qui sont utilisés avec les chambres proportionnelles multifils.

De bons résultats peuvent être obtenus dans la détection des photons X ou gamma lorsque le convertisseur contient un matériau dont le numéro atomique est au moins égal à 25.

Il est également avantageux, en particulier pour la détection des neutrons, que le convertisseur contienne un matériau présentant une section efficace d'interaction avec les particules neutres au moins égale à 1 millibarn. Un barn vaut 10⁻²⁴cm².

Parmi les matériaux possibles, le convertisseur contient de préférence un matériau du groupe comprenant le tungstène, le tantale, le plomb, le cadmium, le gadolinium, le bore, le samarium, l'europium, le lithium, le dysprosium, le rhodium, le béryllium, le carbone, l'or, l'argent, le lanthane, l'uranium appauvri, le platine, le thalium, le niobium, le molybdène, le nickel, le cuivre, le cobalt, le fer, l'iridium, le mercure, l'indium, le manganèse, l'hydrogène, le deutérium, l'azote, l'oxygène, et le chlore.

A titre d'exemple plus précis, le convertisseur peut avoir une épaisseur au plus égale à 2 millimètres et faire, au moins en certains points de l'une de ses faces, un angle inférieur ou égal à 5° avec la direction moyenne de propagation des particules neutres.

Pour des photons d'une énergie de 400 keV par exemple, le convertisseur peut être une plaque de tantale ayant une épaisseur au plus égale à 200 microns et faisant, au moins en certains points de l'une des ses faces, un angle inférieur ou égal à 2° avec la direction moyenne de propagation des particules neutres .

L'organe de détection peut être constitué par de simples bandes, plus ou moins larges, si le dispositif, par exemple pour des applications à taux de comptage réduit, est utilisé en mode PPAC (parallel plate avalanche counter), ou pseudo-PPAC, c'est-à-dire en mode de comptage à avalanche à plaques parallèles et non pas en mode proportionnel.

Dans le cas où la plus grande définition d'image n'est pas exigée, les éléments de détection de forme allongée peuvent être constitués par un matériau électriquement conducteur mais néanmoins assez résistif; ces éléments sont alors tendus parallèlement au plan de la plaque du convertisseur et disposés perpendiculairement à la projection, sur le plan de cette plaque, de la direction moyenne de propagation des particules neutres; ces éléments sont dans ce cas électriquement reliés les uns aux autres à leurs deux extrémités, chaque extrémité étant elle-même reliée à un canal électronique correspondant de détection de charges; dans un tel montage, la localisation des particules neutres le long des éléments de détection est obtenue grâce à la répartition, dans les deux canaux électroniques, du courant produit par les charges collectées.

Par exemple, la distance entre deux fils voisins et la distance entre chaque fil et le convertisseur pourront être inférieures à 15 millimètres.

L'efficacité du dispositif est encore améliorée si ce dernier est doté d'une électrode plane supplémentaire, portée sensiblement au même potentiel électrique que le convertisseur, et disposée parallèlement à ce dernier, et de l'autre côté du réseau de fils par rapport à lui, et si l'organe de détection comprend un réseau de fils et une électrode supplémentaire de chaque côté du convertisseur.

Cet arrangement permet de tirer un plus grand parti encore de la disposition en incidence rasante du convertisseur par rapport à la direction de propagation des particules. Cet arrangement permet en effet d'utiliser un convertisseur de très faible épaisseur, ce qui rend très probable l'émission d'électrons primaires à partir de la surface du convertisseur qui n'est pas directement soumise au rayonnement de particules neutres; or les électrons secondaires, créés par de tels électrons primaires, sont également collectés.

Pour contrôler les paramètres de fonctionnement du dispositif, sur lesquels la nature du milieu séparant le convertisseur de l'organe de détection a une grande influence, l'enceinte renfermant le convertisseur et l'organe de détection est au moins partiellement remplie d'un gaz inerte.

De préférence, la pression de gaz dans cette enceinte est inférieure à 10⁶ pascals et la différence de potentiel électrique entre l'organe de détection et le convertisseur est inférieure à 30 kV.

Le dispositif comprend avantageusement une potence maintenant le convertisseur et l'organe de détection suivant une inclinaison qui, repérée par rapport à un axe de référence lié à la forme extérieure de l'enceinte, permet d'obtenir l'orientation désirée du convertisseur par rapport à la direction moyenne de propagation des particules neutres en orientant cet axe de référence dans cette direction.

Le dispositif de l'invention, adapté à la détection et à la localisation de particules neutres, développe tous ses avantages lorsqu'il est appliqué à l'imagerie, c'est-à-dire utilisé pour obtenir une image au moins partielle d'un corps.

Lorsqu'en effet, un corps est irradié par une source de particules neutres, le rayonnement traversant ce corps subit des atténuations en fonction de la nature du matériau traversé et de sa masse, et présente une distribution spatiale d'intensité correspondante, qu'un capteur tel que décrit précédemment peut révéler.

Dans ces applications, le dispositif de l'invention comprend donc généralement au moins une source de particules neutres éloignée du ou des capteurs, ce ou ces dernier(s) étant orientés en prenant comme direction moyenne de propagation des particules neutres la direction de l'axe qui les joint à la source.

De préférence, le dispositif comprend alors au moins un collimateur de particules neutres associé à un capteur correspondant, ce collimateur présentant une fente restreignant le faisceau de particules reçues de la source à un faisceau en nappe centré sur la direction moyenne de propagation et dont la trace, sur le plan du convertisseur de ce capteur, est sensiblement perpendiculaire à cette direction moyenne de propagation.

Le dispositif peut comprendre un bâti sur lequel sont montés plusieurs capteurs.

Dans ce cas, les capteurs sont avantageusement disposés en quinconce sur le bâti de manière que leurs convertisseurs respectifs, considérés dans leur ensemble, interceptent intégralement un faisceau de particules neutres en nappe en provenance de la source.

En outre, le bâti adopte de préférence une forme enveloppante, telle que celle d'un L, d'un U ou d'un arc de cercle, la source étant disposée, à distance du bâti, à l'intérieur de cette forme enveloppante.

Le dispositif peut comporter au moins deux sources de particules neutres ou une source susceptible d'être placée en au moins deux positions différentes; dans ce cas, les capteurs peuvent être montés à rotation sur le bâti de manière à pouvoir pointer vers l'une ou l'autre des sources de particules neutres, ou des positions possibles de la source.

Le capteur peut être doté d'un convertisseur de surface sensiblement supérieure à 500 cm² associé à deux réseaux de fils s'étendant suivant deux directions orthogonales, de manière à pouvoir fournir une image bidimensionnelle d'un corps irradié selon la technique d'influence électrostatique précédemment décrite.

En outre, le dispositif peut comporter un empilement de plans comprenant alternativement le convertisseur et l'organe de détection.

Ces plans sont parallèles les uns aux autres et placés, comme précédemment décrit, à incidence rasante par rapport à la direction de propagation des particules neutres.

Chaque organe de détection, comme énoncé précédemment, peut être composé d'une série de N bandes conductrices, ou de fils isolés individuellement et parallèles à la projection, sur le plan du convertisseur correspondant, de la direction moyenne de propagation des particules neutres. Si le dispositif comporte M organes de détection, il est apte à donner une image bidimensionnelle d'un corps irradié, correspondant à une matrice de N x M éléments.

Néanmoins, comme la géométrie du capteur décrit jusqu'à présent s'adapte davantage à la réalisation d'images unidimensionnelles, une solution plus simple pour obtenir une image bidimensionnelle d'un corps de dimensions et/ou de volume importants (plusieurs dizaines de mètres cubes par exemple) consiste, comme cela est connu en soi en imagerie, à former une image d'une section du corps à examiner, à scanner le corps à examiner, c'est-à-dire à le balayer en section, et à enregistrer au cours du temps les différentes images obtenues, correspondant aux différentes sections observées.

Dans ce cas, le corps est déplacé par rapport au capteur ou à la source, ou même de préférence par rapport au capteur et à la source.

Le dispositif de l'invention permet notamment d'obtenir une image d'un objet dense, offrant à sa traversée par les particules neutres une épaisseur de métal supérieure au centimètre, et par exemple jusqu'à au moins une soixantaine de centimètres s'il s'agit de fer ou d'acier.

Le dispositif peut ainsi notamment être utilisé pour réaliser des images d'objets denses et volumineux, tels que des conteneurs.

Dans ce type d'application, il est commode d'utiliser des photons X, ou gamma. Leur énergie est par exemple au moins égale à 50 keV, de préférence comprise entre 250 keV et 2 MeV, et plus typiquement de l'ordre de 350 keV à 750 keV.

Les avantages du dispositif de l'invention sont nombreux.

L'efficacité très élevée du capteur, de l'ordre de 30% avec un rayonnement de 400 keV, permet d'obtenir une image très contrastée des objets examinés.

D'un autre côté, toujours en raison de cette grande efficacité, il n'est pas nécessaire d'avoir recours à ces rayonnements très énergétiques, même pour former des images d'objets denses et volumineux comme cela a été mentionné précédemment; il en résulte que les mesures à prendre pour ce qui concerne la protection contre les rayonnements restent modérées, que les sources à utiliser, c'est-à-dire typiquement les générateurs de rayons X, restent d'un volume et d'un coût raisonnables, et que l'angle d'émission des rayons X émis par ces générateurs reste assez important, ce qui permet d'irradier un objet relativement volumineux dans un espace assez restreint, c'est-à-dire dans une installation ou un bâtiment de taille assez modeste.

D'autres caractéristiques et avantages de l'invention ressortiront de la description d'un mode de réalisation particulier plus spécifiquement adapté à la détection des photons, qui en est faite ci-après, à titre indicatif et nullement limitatif, en référence au dessin annexé, sur lequel:
- la figure 1 est une vue en coupe schématique partielle du capteur utilisé dans le dispositif de l'invention, cette vue illustrant le principe de fonctionnement de ce capteur,
- la figure 2 est une vue partielle éclatée du capteur,
- la figure 3 est une vue en coupe du capteur complet,
- la figure 4 est une vue en perspective d'une installation d'imagerie industrielle utilisant le dispositif de l'invention, et
- la figure 5, composée des figures 5A et 5B représente des détails du dispositif.

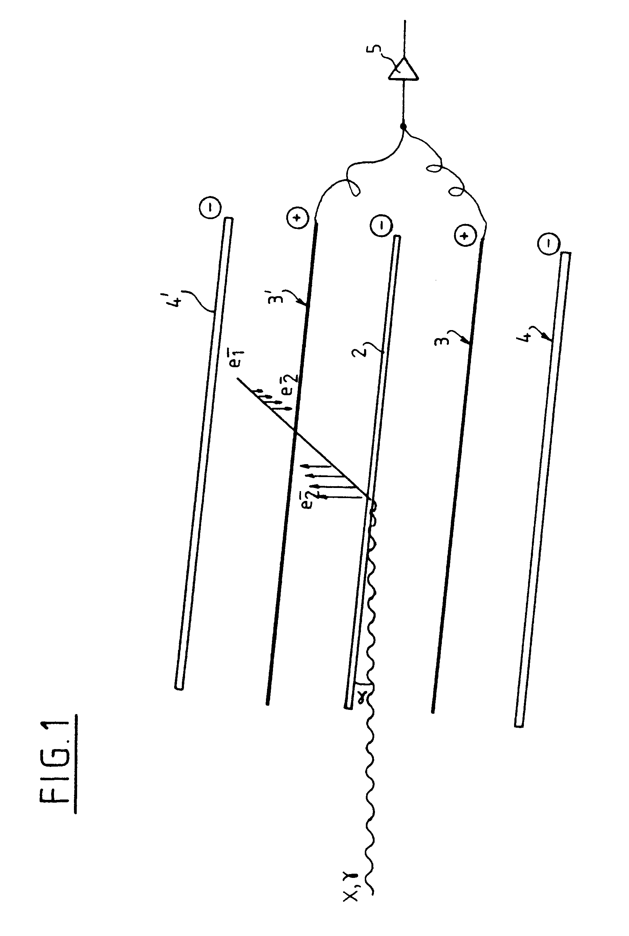

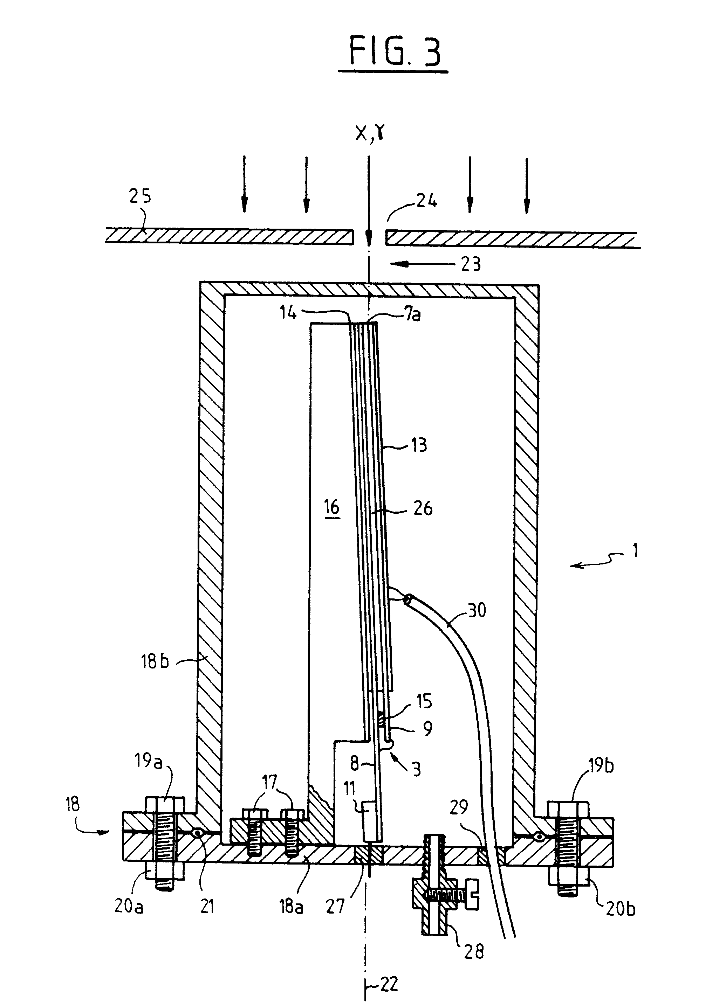

L'invention concerne un dispositif comprenant au moins un capteur 1 (intégralement visible sur la figure 3), dans lequel sont prévus un convertisseur 2 (figure 1) et un organe de détection, lui-même composé de plusieurs éléments 3, 3', 4, 4' qui seront décrits ultérieurement.

Ce capteur est destiné à détecter et à localiser des particules neutres (telles que photons X, photons gamma, neutrons), qui l'irradient. La direction moyenne de propagation de ces particules, qui sur la figure 1 est symbolisée par un trajet ondulatoire, est supposée sensiblement fixe par rapport au capteur, au moins pendant la détection. Ces particules seront supposées se propager dans une nappe perpendiculaire au plan de la figure 1, et dont la trace dans le plan de cette figure correspond sensiblement au trajet ondulatoire.

Le convertisseur 2 est une plaque d'un matériau de numéro atomique élevé, par exemple du tantale, disposée en incidence rasante par rapport à la direction de propagation des particules neutres; ainsi, à titre indicatif, l'angle alpha entre cette plaque et cette direction peut être égal à 1°. Sur les figures 1 et 3, ce convertisseur est supposé disposé dans un plan perpendiculaire à celui de ces figures.

Ce convertisseur mesure par exemple 30 centimètres en longueur (dimension la plus longue visible sur les figures 1 à 3), 16 centimètres de largeur (dimension perpendiculaire ou pratiquement perpendiculaire au plan de chacune des figures 1 à 3) et 70 microns d'épaisseur.

Bien que cette caractéristique ne soit pas indispensable, il est commode d'utiliser un convertisseur plan. Si la rigidité de la plaque constituant ce convertisseur n'est pas suffisante, il est possible de coller cette plaque sur un support rigide, moyennant une perte d'efficacité de l'ordre de 20% à 50%, compte tenu du fait que les électrons ne sont plus détectés que dans un demi espace.

Comme le montre la figure 1, plus l'angle alpha est petit et plus, pour une même épaisseur du convertisseur, la distance que la particule incidente doit ou devrait parcourir dans ce convertisseur pour le traverser est importante.

Pour un angle alpha de 1° et une épaisseur de 70 microns du convertisseur, cette distance est de l'ordre de 4.000 microns, c'est-à-dire 4 millimètres.

Le convertisseur 2 est flanqué de deux réseaux de fils conducteurs 3 et 3', portés à un potentiel électrique différent de celui auquel est porté le convertisseur 2.

Par exemple, les réseaux de fils 3 et 3' sont à un potentiel de masse, tandis que le convertisseur est porté à un potentiel négatif de 2 à 3 kV.

Sous l'impact d'une particule neutre incidente, le convertisseur 2 est susceptible, par effet photoélectrique, par effet Compton, ou par création de paires, de libérer au moins un électron primaire e⁻₁ à haute énergie qui peut ioniser le gaz et créer des paires électrons-ions. Les électrons secondaires e⁻₂ ainsi créés sont attirés, en raison de leur charge électrique, vers l'un des deux réseaux de fils 3, 3', et créent eux-mêmes d'autres électrons secondaires e⁻₂.

Dans le langage de l'homme de l'art, les particules chargées, en particulier les électrons secondaires collectés sur l'anode, sont souvent dénommées "charges".

Alors que l'angle alpha entre les particules incidentes et le convertisseur 2 est faible, l'angle d'émission des électrons e⁻₁ par rapport au convertisseur peut être élevé, et pratiquement égal à 90°, de sorte que le chemin que les électrons doivent effectuer à l'intérieur du convertisseur pour s'en extraire est très petit vis-à-vis des 4 millimètres d'épaisseur virtuelle que ce convertisseur offre au rayonnement incident.

Les réseaux de fils anodiques 3 et 3' permettent une amplification de signal par une multiplication des charges grâce au phénomène d'avalanche de Townsend, et permettent également une localisation de la charge ainsi reçue. Ces fils sont situés de part et d'autre du convertisseur 2, dans des plans parallèles à ce dernier, c'est-à-dire dans des plans respectifs perpendiculaires au plan de la figure 1.

Les fils des deux réseaux 3 et 3' sont en outre parallèles à la projection, sur le plan de la plaque 2, de la direction moyenne de propagation des particules neutres.

Comme cette direction moyenne correspond sur la figure 1 à celle du trajet ondulatoire représenté, la projection de cette direction sur la plaque 2 est confondue, sur la figure 1, avec le bord inférieur du rectangle très allongé représentant la section droite de cette plaque, et les fils des deux réseaux 3 et 3' sont parallèles à cette projection.

Tous les fils des deux réseaux 3 et 3' sont portés au même potentiel électrique, mais chaque fil de chaque réseau est électriquement isolé de tous les autres fils du même réseau. En revanche, chaque fil de chaque réseau peut, comme représenté sur la figure 1, être relié au fil de l'autre réseau qui occupe la position symétrique par rapport au plan du convertisseur, pour former avec lui une paire de fils de détection. Chacune des paires de fils de détection que les réseaux 3 et 3' peuvent former est reliée à un canal électronique de détection séparé, symbolisé par un amplificateur 5. Chaque canal amplifie le courant électrique correspondant aux charges e⁻ collectées sur la paire de fils à laquelle il est associé. Ainsi, l'ensemble des canaux électroniques délivrent un ensemble de signaux électriques qui représente une image de la distribution d'intensité des particules neutres suivant une direction perpendiculaire au plan de la figure 1.

Ces signaux sont utilisés, comme cela est bien connu de l'homme de l'art, pour obtenir une image finale video.

L'organe de détection du capteur comprend en outre deux électrodes planes supplémentaires 4 et 4', disposées parallèlement au convertisseur 2 et aux réseaux 3 et 3', au delà de ces derniers par rapport au convertisseur. Ces électrodes supplémentaires sont portées au même potentiel que le convertisseur, c'est-à-dire à un potentiel négatif de 2 à 3 kV.

Bien que non indispensables, ces électrodes supplémentaires permettent une meilleure multiplication et une meilleure collection des charges, ainsi qu'une suppression des forces électrostatiques qui, jouant sur les fils anodiques des réseaux 3 et 3', pourraient les incurver et modifier le comportement du capteur.

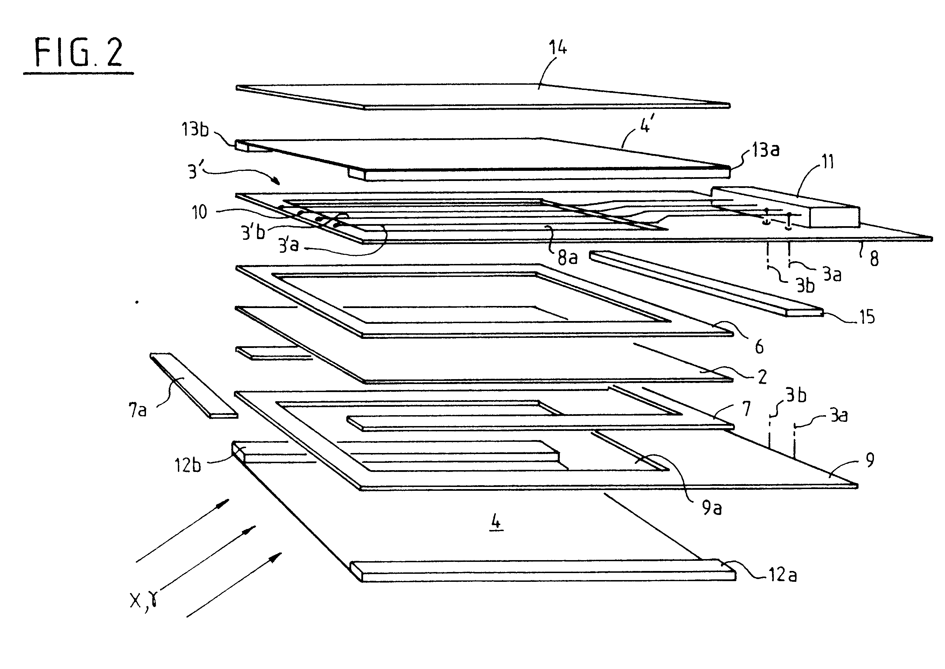

La figure 2 permet d'avoir une meilleure représentation spatiale de la structure de l'ensemble convertisseur-organe de détection.

La figure 2 montre au centre le convertisseur 2 qui, dans le mode de réalisation particulier présenté, est une plaque de tantale de 30cmx16cmx70 micromètres.

Cette plaque est tendue entre deux cadres rectangulaires en acier inoxydable 6, 7, ayant chacun une épaisseur de 1.5mm.

Le cadre 7 qui, sur la figure 2, se trouve être le cadre inférieur, est privé de bord du côté où le convertisseur reçoit le rayonnement de particules neutres, symbolisé par les flèches. Ce bord est remplacé par un élément allongé 7a réalisé en un matériau plus perméable aux particules neutres que l'acier, par exemple en résine époxy chargée de fibre de verre.

De part et d'autre de l'ensemble 2-6-7-7a constitué par le convertisseur et ses cadres, sont montées deux plaques 8 et 9 supportant des fils anodiques tels que 3a, arrangés en réseaux 3, 3'. Pour des raisons de clarté du dessin, le réseau 3 n'a pas été représenté sur la figure 2.

Ces plaques 8 et 9, plus longues que les cadres 6 et 7, sont réalisées en un matériau isolant rigide et perméable aux particules neutres. Les plaques de résine époxy chargée de fibre de verre, qui sont généralement utilisées comme supports de circuits imprimés, conviennent très bien.

Ces plaques 8 et 9 ont chacune une épaisseur de 1.5mm et sont percées de fenêtres 8a, 9a aux dimensions intérieures des cadres 6 et 7.

Les fils anodiques, tels que 3'a, du réseau 3' sont tendus sur la surface supérieure (dans le sens de la figure 2) de la plaque 8, au dessus de la fenêtre 8a.

Ces fils, par exemple réalisés en tungstène doré ou en acier inoxydable, et présentant chacun un diamètre de 50 micromètres, sont ainsi tendus parallèlement les uns aux autres, la distance entre deux fils voisins étant par exemple voisine de 2.5mm.

Ces fils sont maintenus sur la plaque 8 par tout moyen approprié, par exemple par des points de soudure 10.

Ces fils, électriquement isolés les uns des autres grâce à la résistivité très élevée du cadre 8, sont séparément raccordés aux différentes cellules de branchement d'un connecteur 11 fixé à l'extrémité de la plaque 8.

Les deux fils tendus le long de chacun des bords de la fenêtre 8a ont un diamètre supérieur à celui des autres fils et par exemple égal à 70 microns et ne sont pas raccordés au connecteur 11. Cette caractéristique, non spécifiquement représentée sur la figure 2 pour des raisons de clarté, permet d'assurer un champ électrique uniforme sur tous les fils anodiques reliés au connecteur 11.

Le réseau de fils 3 porté par la plaque 9 est réalisé de façon analogue, symétriquement par rapport au plan du convertisseur 2.

En d'autres termes, si l'on se réfère à la disposition de la figure 2, les fils du réseau 3 sont tendus sur la surface non visible de la plaque 9.

Seul le raccordement des réseaux de fils 3 et 3' peut différer.

Par exemple, comme représenté sur la figure 2, la plaque 9 est moins longue que la plaque 8 et les fils tels que 3a, 3b du réseau 3 sont séparément raccordés aux fils 3'a, 3'b du réseau 3' qui occupent les positions symétriques par rapport au plan du convertisseur 2, au voisinage du point de raccordement de ces derniers au connecteur 11. Ainsi le connecteur 11, bien que porté par la plaque 8, sert également aux fils du réseau 3 portés sur la plaque 9.

De part et d'autre de l'ensemble 2-6-7-8-9 décrit jusqu'à présent sont symétriquement disposés, à une distance de chacun des réseaux 3 et 3' fixée à 3mm par des cales d'épaisseur 12a, 12b, 13a, 13b, les électrodes planes supplémentaires 4 et 4'.

Ces dernières, aussi dénommées cathodes en raison de leur polarisation électrique négative, sont par exemple des plaques d'acier inoxydable, dont une des fonctions est de repousser les électrons arrachés au convertisseur vers les fils anodiques des réseaux 3 et 3'.

Au dessus de la cathode 4' (dans la disposition représentée sur la figure 2) est prévue une plaque isolante 14 dont la fonction d'isolation sera mieux comprise en référence à la figure 3.

Enfin, une entretoise 15 est disposée entre les plaques 8 et 9 afin d'éviter tout mouvement relatif de ces plaques.

L'empilement décrit en référence à la figure 2 est assemblé par des moyens appropriés, par exemple grâce à des vis de NYLON traversant et maintenant solidaires les éléments empilés.

L'ensemble est monté (figure 3) sur une potence 16, la plaque 14 isolant la cathode 12 de la potence pour le cas où cette dernière est métallique.

La potence 16 est fixée par tous moyens appropriés, tels que des boulons 17, sur la base 18a d'une enceinte 18 étanche au gaz.

Cette enceinte 18 est essentiellement constituée d'un caisson parallélépipédique 18b rendu solidaire de la base 18a au moyen d'organes appropriés tels que des boulons 19a, 19b et des écrous 20a, 20b, un joint torique 21 assurant l'étanchéité de l'enceinte au gaz.

L'enceinte est réalisée en un matériau perméable aux particules neutres et mécaniquement résistant, par exemple en aluminium.

Sur la figure 3, la référence 22 désigne l'axe de symétrie longitudinal de la forme extérieure parallélépipédique de l'enceinte 18.

Les traces de cet axe sur la base 18a et sur le fond de caisson 18b peuvent être déterminées par de simples mesures de longueur.

Pour assurer une orientation correcte du convertisseur par rapport au rayonnement incident, alors que ce convertisseur, enfermé dans l'enceinte 18, n'est plus visible, la potence 16 maintient le convertisseur 2 dans une orientation, repérée par rapport à l'axe de référence 22, qui correspond à l'inclinaison souhaitée de ce convertisseur sur la direction moyenne de propagation des particules neutres.

En d'autres termes, le plan d'appui qu'offre la potence 16 à l'empilement décrit en référence à la figure 2 fait un angle alpha de 1° avec l'axe 22, de sorte qu'il suffit d'aligner cet axe avec la direction moyenne de propagation des particules pour obtenir l'orientation correcte du convertisseur 2 autour d'un axe perpendiculaire au plan de la figure 3. L'enceinte 18 peut ensuite être orientée par rotation autour de l'axe 22 pour que le bord antérieur du convertisseur 2, connexe à l'élément de cadre 7a, se trouve parallèle au plan moyen d'une nappe 23 du faisceau de particules incidentes.

Ce plan moyen, et le bord antérieur du convertisseur sont alors perpendiculaires au plan de la figure 3.

Le faisceau en nappe 23 de particules neutres est défini par une longue fente 24 d'un collimateur 25 par exemple constitué d'un blindage de plomb, cette fente ayant une largeur de 5 mm et une longueur de 16cm. Sur la figure 3, la direction de la longueur de la fente 24 est perpendiculaire au plan de la figure, et la trace, sur le convertisseur 2, du plan moyen de la nappe 23 est une ligne 26 perpendiculaire au plan de la figure 3 et située environ à mi-hauteur du convertisseur.

La base 18a de l'enceinte 18 comprend un connecteur à broches 27 à traversée étanche. Chaque cellule de branchement du connecteur 11 est, à l'intérieur de l'enceinte 18, raccordée à l'une des broches du connecteur 27 et, à l'extérieur de l'enceinte, chaque broche est raccordée à un canal électronique de traitement correspondant.

La base 18a reçoit également une vanne 28 permettant de remplir l'enceinte à toute pression convenable, au moyen d'un gaz adéquat.

Le gaz choisi est essentiellement constitué d'un gaz inerte, tel que de l'argon, auquel sont rajoutées des traces d'un gaz à molécule polyatomique, tel que de l'isobutane, de l'éthane, de l'alcool sous forme vapeur, du méthylal ou un mélange gaz carbonique/alcool.

La pression est réglée à une valeur comprise entre 5.10³ et 10⁶ pascals, et dans le mode de réalisation particulier décrit, fixée à 10⁵ pascals.

Il est possible également, pour éviter les conséquences d'un vieillissement du gaz, de prévoir deux ouvertures dans l'enceinte, telles que celle que forme la vanne 28, de manière à pouvoir établir une circulation continue et/ou un renouvellement de gaz dans l'enceinte.

Enfin, la base 18a comprend une autre traversée étanche 29 pour un câble électrique 30.

Ce câble, à isolation externe, a pour fonction de raccorder le convertisseur 2 et les cathodes 4 et 4' à un potentiel électrique de polarisation négatif, de l'ordre de 2 ou 3 kV dans l'exemple décrit.

Les conducteurs électriques de ce câble sont par exemple raccordées à des prises latérales (non visibles) du convertisseur et des cathodes.

La tension de polarisation choisie dépend de la distance entre les fils anodiques des réseaux 3 et 3ʹ et le convertisseur 2, de la pression de gaz dans l'enceinte, du facteur d'amplification souhaité pour les avalanches de Townsend, et du diamètre des fils anodiques. La tension choisie est avantageusement de l'ordre d'un volt par millimètre et par torr (1 torr vaut environ 1.3 10² pascals).

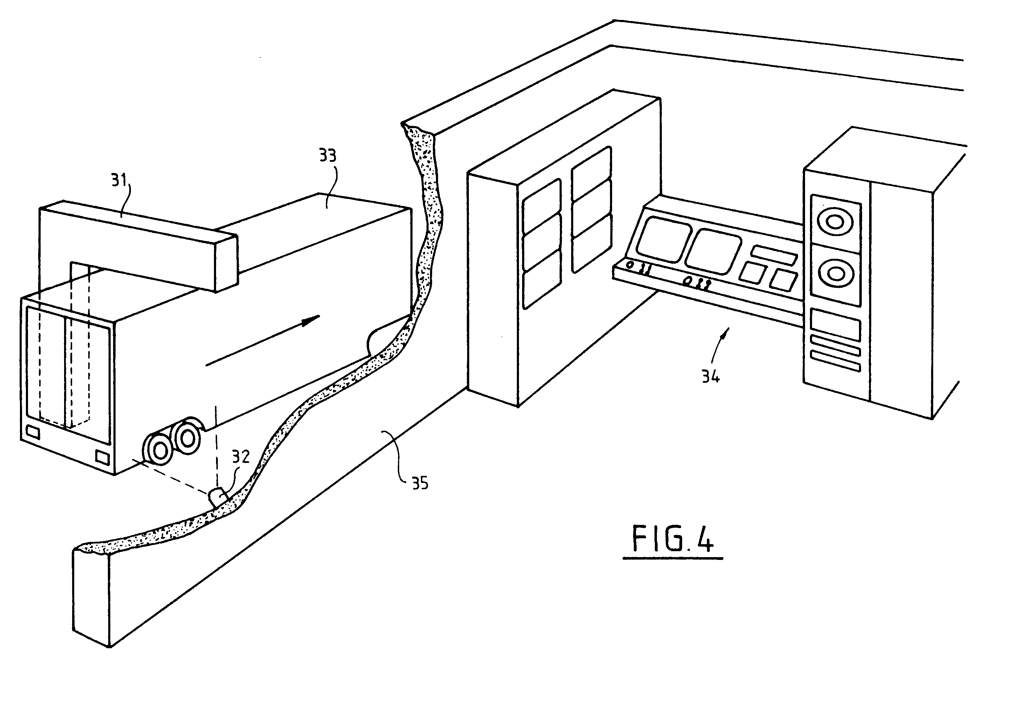

La figure 4 représente une installation utilisant le dispositif de l'invention.

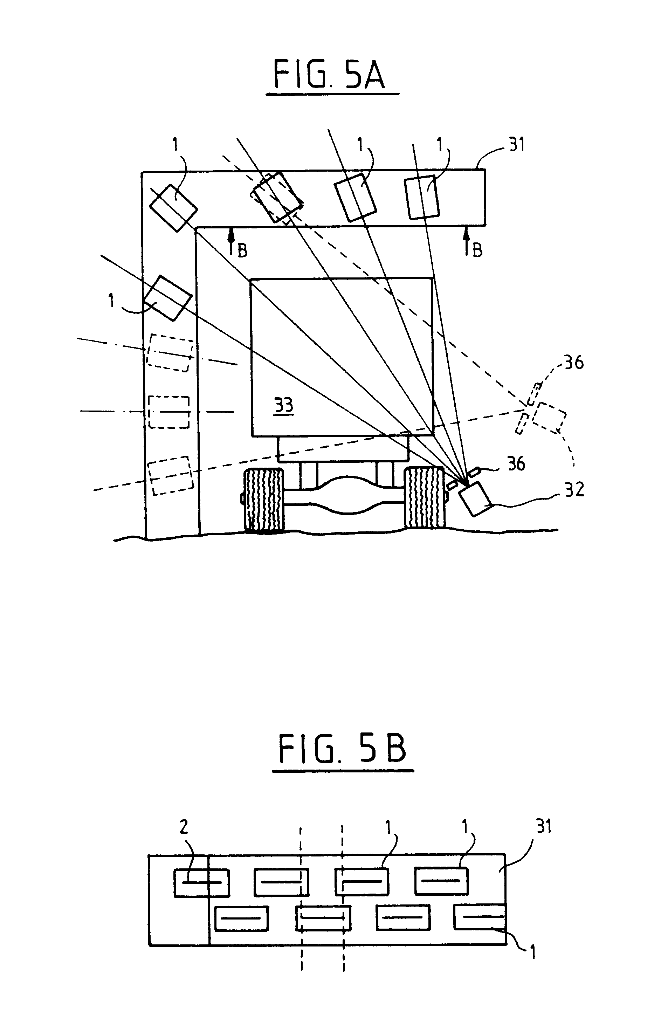

Le dispositif comprend un bâti 31 sur lequel sont montés plusieurs capteurs tels que le capteur 1 de la figure 3, une trentaine par exemple (voir fig. 5A).

Une source 32 de particules neutres, telle qu'un générateur de rayons X, un accélérateur linéaire ou une source isotopique (cobalt 60 par exemple) est disposée à distance du bâti 31 de manière à émettre des particules vers les capteurs, ou vers certains au moins d'entre eux.

Le bâti 31 a une forme enveloppante, par exemple une forme en L ou en demi-cercle, et la distance entre le bâti et la source peut atteindre plusieurs mètres, de manière à permettre l'interposition d'un objet éventuellement volumineux, tel qu'une remorque ou un conteneur 33, qui défile à vitesse constante dans le sens de la flèche.

Une installation d'imagerie 34, protégée de la source 32 par un mur 35, reçoit, de chacune des broches des connecteurs 27 de chacun des capteurs 1 montés sur le bâti 31, un signal de courant, éventuellement préamplifié par un amplificateur tel que 5, représentant l'intensité du rayonnement de particules neutres qui, ayant traversé l'objet 33, ont été détectées par deux fils anodiques, tels que 3a et 3'a, raccordés à cette broche.

Chacun de ces signaux est ainsi représentatif de l'absorption du rayonnement de la source par l'objet examiné 33 suivant une direction très précise, donc représentatif de la nature et de la masse du matériau traversé.

Les signaux de courant sont individuellement intégrés pendant un court intervalle de temps, par exemple 20ms, puis convertis en échantillons numériques qui sont stockés dans une mémoire.

Les échantillons numériques relatifs à une même période d'intégration correspondent ainsi à une image de la section de l'objet 33 qui a été irradiée pendant cette période.

L'ensemble des échantillons numériques mémorisés, et correspondant à l'ensemble des périodes d'intégration qui se sont écoulées pendant le défilement complet de l'objet 33, peuvent donc être utilisés, selon des techniques connues, pour reconstruire une image bidimensionnelle de cet objet.

En pratique il peut être intéressant, comme le montre la figure 5A, de prendre deux images de l'objet 33 de façon à en couvrir tous les angles, ou à en obtenir une image stéréoscopique.

Ceci peut être réalisé en déplaçant la source 32 entre les deux prises d'images (ou en utilisant une première puis une seconde source), et en faisant pointer les capteurs, pour chacune des prises d'image, vers la source utilisée.

A cette fin, les capteurs 1 peuvent être montés à rotation sur le bâti, autour d'un axe perpendiculaire au plan de la figure 5A, de manière à pouvoir adopter l'une ou l'autre des deux positions pour lesquelles ils pointent vers la source.

La figure 5A représente en 36 un détail que la figure 4 avait omis pour des raisons de clarté.

Cette référence 36 désigne un collimateur, par exemple une plaque de plomb, présentant une fente allongée dans le plan de la figure 5A, de façon à limiter l'émission des particules neutres à un faisceau en nappe dont le plan moyen, correspondant au plan moyen du bâti, est parallèle au plan de la figure 5A, et dont l'épaisseur est du même ordre de grandeur que celle du bâti 31.

La figure 5B est une vue suivant les flèches BB de la figure 5A.

Cette figure illustre une solution à un problème qui se pose dans la mise en oeuvre du procédé d'imagerie de la figure 5A.

En effet, l'encombrement de chaque capteur, dans une direction perpendiculaire au plan de la figure 3, est nécessairement supérieur à la largeur du convertisseur intégré dans ce capteur. Il est donc impossible, en disposant les capteurs sur une seule rangée (de droite à gauche sur la figure 5B) d'intercepter intégralement, c'est-à-dire dans toute son étendue dans son plan moyen, le faisceau en nappe émis par la source 32 et le collimateur 36.

Ce problème est résolu en disposant les capteurs 1 en quinconce sur le bâti, comme le montre la figure 5B.

Avec un convertisseur de tantale d'une épaisseur de 100 microns, une distance convertisseur-fils anodiques de 2.5 mm,une distance source-capteur de 3m, et un générateur de rayons X de 400 keV à 10 mA, l'interposition de 4cm d'acier entre la source et le capteur conduit à un courant de l'ordre de 6.10⁻⁶A sur les fils anodiques, et l'interposition de 14cm d'acier conduit encore à un courant de l'ordre de 3.10⁻⁹A.

Comme cela apparaîtra à l'homme de l'art, les applications du dispositif de l'invention sont nombreuses et ne se limitent pas à l'application spécifiquement illustrée par les figures 4 et 5.

En particulier, l'invention peut aussi être utilisée en scintigraphie et en tomographie par rayons X, par rayons gamma , par neutrons ou par émission de positrons.

Dans tous ces cas, la très grande efficacité du capteur de l'invention permet l'obtention d'une bonne image même en l'absence d'un fort rayonnement.

L'invention peut en outre être utilisée dans des applications pour lesquelles aucun balayage n'est nécessaire, par exemple pour obtenir une image unidimensionnelle de diffraction X.

## Revendications

1. Dispositif pour la détection et la localisation de particules neutres, telles que photons X, photons gamma ou neutrons, appartenant à un flux émis par une source (32), et se propageant autour d'une direction moyenne dans un angle solide d'ouverture limitée par un collimateur, ce dispositif comprenant au moins un capteur (1) comportant au moins lui-même :
- un convertisseur (2) propre à émettre des particules ionisantes sous l'impact des particules neutres qu'il reçoit, ce convertisseur étant constitué d'un matériau solide et s'étendant dans un plan;
- un gaz environnant le convertisseur, propre à donner naissance à des charges électriques lorsqu'il est traversé par des particules ionisantes;
- des moyens de détection (3 à 9), comprenant des conducteurs allongés de collectage de charges sensiblement parallèles les uns aux autres, arrangée en un réseau sensiblement plan et parallèle au plan du convertisseur, et propres à recueillir les charges créées par ionisation stimulée;
- des moyens de polarisation pour appliquer une différence de potentiel entre le convertisseur et les conducteurs allongés en vue de réaliser une multiplication des charges par leur accélération dans le champ ainsi engendré, conduisant à une ionisation stimulée du gaz;
- une enceinte (18), perméable aux particules neutres et renfermant le convertisseur, le gaz, et les moyens de détection; et
- des circuits électroniques reliés aux conducteurs allongés de collectage de charges pour produire une image représentative de la répartition des charges sur les conducteurs allongés de collectage auxquels ces circuits sont reliés,
caractérisé en ce que le collimateur restreint le faisceau de particules reçues de la source à un faisceau en nappe (23) centré sur ladite direction moyenne de propagation, en ce que le plan du convertisseur fait avec cette direction moyenne de propagation un angle (alpha) inférieur à 10°, en ce que lesdits conducteurs de collectage de charges sont sensiblement parallèles à la projection de ladite direction moyenne de propagation sur le plan du convertisseur, en ce que lesdits circuits électroniques sont indépendants les uns des autres et en ce que chacun desdits circuits électroniques est relié à une conducteur de collectage de charges respectif ou à un couple respectif de conducteurs de collectage de charges situés de part et d'autre du plan du convertisseur et au droit l'un de l'autre par rapport à ce plan et sert à former l'un des pixels d'une rangée de pixels constituant une image unidimensionnelle représentative de la répartition d'intensité du flux de particules neutres suivants une direction (26), parallèle au plan du convertisseur et perpendiculaire à ladite direction moyenne de propagation des particules neutres.

2. Dispositif pour la détection et la localisation de particules neutres, telles que photons X, photons gamma ou neutrons, appartenant à un flux émis par une source (32), et se propageant autour d'une direction moyenne dans un angle solide d'ouverture limitée par un collimateur, ce dispositif comprenant au moins un capteur (1) comportant au moins lui-même :
- un convertisseur (2) propre à émettre des particules ionisantes sous l'impact des particules neutres qu'il reçoit, ce convertisseur étant constitué d'un matériau solide et s'étendant dans un plan;
- un gaz environnant le convertisseur, propre à donner naissance à des charges électriques lorsqu'il est traversé par des particules ionisantes;
- des moyens de détection (3 à 9), comprenant des conducteurs allongés de collectage de charges sensiblement parallèles les uns aux autres, arrangée en un réseau sensiblement plan et parallèle au plan du convertisseur, et propres à recueillir les charges crées par ionisation stimulée;
- des moyens de polarisation pour appliquer une différence de potentiel entre le convertisseur et les conducteurs allongés en vue de réaliser une multiplication des charges par leur accélération dans le champ ainsi engendré, conduisant à une ionisation stimulée du gaz;
- une enceinte (18), perméable aux particules neutres et renfermant le convertisseur, le gaz, et les moyens de détection; et
- des circuits électroniques reliés aux conducteurs allongés de collectage de charges pour produire une image représentative de la répartition des charges sur les conducteurs allongés de collectage auxquels ces circuits sont reliés,
caractérisé en ce que le collimateur restreint le faisceau de particules reçues de la source à un faisceau en nappe (23) centré sur ladite direction moyenne de propagation, en ce que le plan du convertisseur fait avec cette direction moyenne de propagation un angle (alpha) inférieur à 10°, en ce que lesdits conducteurs de collectage de charges sont résistifs, sensiblement perpendiculaires à la projection de ladite direction moyenne de propagation sur le plan du convertisseur et reliés par leurs extrémités à deux circuits électroniques respectifs auxquels ils fournissent des courants respectifs permettant à ces circuits, de façon connue en soi, la localisation des charges le long de ces conducteurs de collectage de charges, ladite image étant alors constituée par une image unidimensionnelle représentative de la répartition d'intensité du flux de particules neutres suivant une direction (26) parallèle au plan du convertisseur et perpendiculaire à ladite direction moyenne de propagation des particules neutres.

3. Dispositif suivant l'une quelconque des revendications précédentes, caractérisé en ce que le convertisseur contient un matériau dont le numéro atomique est au moins égal à 25.

4. Dispositif suivant l'une quelconque des revendications précédentes, caractérisé en ce que le convertisseur contient un matériau présentant une section efficace d'interaction avec les particules neutres au moins égale à 1 millibarn.

5. Dispositif suivant l'une quelconque des revendications précédentes, caractérisé en ce que le convertisseur a une épaisseur au plus égale à 2 millimètres et fait un angle au plus égal à 5° avec la direction moyenne du flux de particules neutres.

6. Dispositif suivant l'une quelconque des revendications précédentes, caractérisé en ce que le convertisseur est une plaque de tantale dont l'épaisseur est au plus égale à 200 microns et qui fait un angle au plus égal à 2° avec la direction moyenne du flux.

7. Dispositif suivant l'une quelconque des revendications précédentes, caractérisé en ce que la distance entre deux fils voisins et la distance entre chaque fil et le convertisseur sont inférieures à 15 millimètres.

8. Dispositif suivant l'une quelconque des revendications précédentes, caractérisé en ce que les moyens de détection comprennent en outre au moins une électrode plane supplémentaire, portée sensiblement au même potentiel électrique que le convertisseur, et disposée parallèlement à ce dernier, et de l'autre côté du réseau de fils par rapport à lui.

9. Dispositif suivant la revendication 8, caractérisé en ce que les moyens de détection comprennent un réseau de fils et une électrode supplémentaire de chaque côté du convertisseur.

10. Dispositif suivant l'une quelconque des revendications précédentes, caractérisé en ce que la pression de gaz dans l'enceinte est inférieure à 10⁶ Pascals.

11. Dispositif suivant la revendication 10, caractérisé en ce que la différence de potentiel appliquée par lesdits moyens de polarisation électrique est inférieure à 30 kV.

12. Dispositif suivant l'une quelconque des revendications précédentes, caractérisé en ce qu'il comprend une potence maintenant le convertisseur et les moyens de détection suivant une inclination qui, repérée par rapport à un axe de référence lié à la forme extérieure de l'enceinte, permet d'obtenir l'orientation désirée du convertisseur par rapport à la direction moyenne du flux de particules neutres en orientant cet axe de référence dans cette direction.

13. Dispositif suivant l'une quelconque des revendications précédentes, caractérisé en ce que le collimateur présente une fente dont la trace, sur le plan du convertisseur dudit capteur, est sensiblement perpendiculaire à ladite direction moyenne du flux de particules neutres.

14. Dispositif suivant l'une quelconque des revendications précédentes, caractérisé en ce qu'il comprend un bâti sur lequel sont montés plusieurs capteurs.

15. Dispositif suivant la revendication 14, caractérisé en ce que les capteurs sont disposés en quiconce sur le bâti de manière que leurs convertisseurs respectifs, considérés dans leur ensemble, interceptent intégralement un faisceau de particules neutres en nappe en provenance de la source.

16. Dispositif suivant les revendications 14 et 15, caractérisé en ce que le bâti adopte une forme enveloppante, telle que celle d'un L, d'un U ou d'un arc de cercle, la source étant disposée, à distance du bâti, à l'intérieur de cette forme enveloppante.

17. Dispositif suivant l'une des revendications précédentes, caractérisé en ce que l'énergie des particules neutres utilisées est comprise entre 250 keV et 2 MeV.

18. Dispositif suivant la revendication 17, caractérisé en ce que l'énergie des particules neutres utilisées est comprises entre 350 keV et 750 keV.

## Claims

1. A device for detecting and localizing neutral particles such as X photons, gamma photons, or neutrons, which are part of a flux emitted by a source (32) and which propagate in an average direction in a solid angle of aperture limited by a collimator, the device comprising at least one sensor (1), comprising itself at least:
· a converter (2) capable of emitting ionizing particles under the impact of the neutral particles which it receives, the converter being constituted by a solid material and extending in a plane;
· a gas surrounding the converter, capable of producing electrical charges when ionized particles pass through it;
· detection means (3 to 9), comprising elongate charge-collecting conductors which are substantially parallel to one another, arranged in a substantially flat network and parallel to the plane of the converter, and capable of collecting charges created through stimulated ionization;
· polarization means for applying a potential difference between the converter and the elongate conductors in order to multiply charges by accelerating them in the field thus generated, leading to stimulated ionization of the gas;
· an enclosure (18), enclosing the converter, the gas, and the detection means, which enclosure is permeable to neutral particles; and
· electronic circuits connected to the elongate charge-collecting conductors, in order to produce an image representative of charge distribution on the elongate collecting conductors to which the circuits are connected;
the device being characterized in that the collimator restricts the beam of particles received from the source to a flat beam (23) centered on the said average propagation direction, in that the plane of the converter forms an angle (alpha) of less than 10° with the average propagation direction, in that the said charge-collecting conductors are substantially parallel to the projection of the said average propagation direction on the plane of the converter, in that the said electronic circuits are independent from each other, and in that each of the said electronic circuits is connected to a respective charge-collecting conductor or to a respective pair of charge-collection conductors, located on both sides of the plane of the converter and opposite to each other about the plane, and forming one pixel in a row of pixels constituting a one-dimensional image representative of the distribution of neutral particle intensity along a direction (26) parallel to the plane of the converter and perpendicular to the said average direction of neutral particle propagation.

2. A device for detecting and localizing neutral particles such as X photons, gamma photons, or neutrons, which are part of a flux emitted by a source (32) and which propagate in an average direction in a solid angle of aperture limited by a collimator, the device comprising at least one sensor (1), comprising itself at least:
· a converter (2) capable of emitting ionizing particles under the impact of the neutral particles which it receives, the converter being constituted by a solid material and extending in a plane;
· a gas surrounding the converter, capable of producing electrical charges when ionized particles pass through it;
· detection means (3 to 9), comprising elongate charge-collecting conductors which are substantially parallel to one another, arranged in a substantially flat network and parallel to the plane of the converter, and capable of collecting charges created through stimulated ionization;
· polarization means for applying a potential difference between the converter and the elongate conductors in order to multiply charges by accelerating them in the field thus generated, leading to stimulated ionization of the gas;
· an enclosure (18) enclosing the converter, the gas, and the detection means, which enclosure is permeable to neutral particles; and
· electronic circuits connected to the elongate charge-collecting conductors, in order to produce an image representative of charge distribution on the elongate collecting conductors to which the circuits are connected;
the device being characterized in that the collimator restricts the beam of particles received from the source to a flat beam (23) centered on the said average propagation direction, in that the plane of the converter forms an angle (alpha) of less than 10° with the average propagation direction, in that the said charge-collecting conductors are resistant, substantially perpendicular to the projection of the said average propagation direction on the plane of the converter, and connected by their ends to two respective electronic circuits to which they supply respective currents enabling the circuits, through a known method, to localize charges along the charge-collecting conductors, the said image being constituted in this case by a one-dimensional image representative of the distribution of neutral particle flux intensity along a direction parallel to the plane of the converter and perpendicular to the said average direction (26) of neutral particle propagation.

3. A device according to any preceding claim, characterized in that the converter contains a material whose atomic number is not less than 25.

4. A device according to any preceding claim, characterized in that the converter contains a material having an effective interaction section with the neutral particles of not less than 1 millibarn.

5. A device according to any preceding claim, characterized in that the converter has a thickness of not more than 2 millimeters and is at an angle of not more than 5° to the average direction of neutral particle propagation.

6. A device according to any preceding claim, characterized in that the converter is a plate of tantalum having a thickness of not more than 200 microns at an angle of not more than 2° to the average direction of neutral particle propagation.

7. A device according to any preceding claim, characterized in that the distance between two adjacent wires and the distance between each wire and the converter are less than 15 millimeters.

8. A device according to any preceding claim, characterized in that the detector member also comprises at least one additional plane electrode raised to substantially the same electrical potential as the converter and disposed parallel thereto on the opposite side of the network of wires.

9. A device according to claim 8, characterized in that the detector member comprises a network of wires and an additional electrode on each side of the converter.

10. A device according to any preceding claim, characterized in that the gas pressure in the enclosure is less than 10⁶ pascals.

11. A device according to claim 10, characterized in that the electrical potential difference between the detector member and the converter is less than 30 kV.

12. A device according to any preceding claim, characterized in that it includes a bracket holding the converter and the detector member at an inclination which, relative to a reference axis related to the outside shape of the enclosure, makes it possible to obtain the desired orientation of the converter relative to the average direction of neutral particle propagation by pointing said reference axis in said direction.

13. A device according to any preceding claim, characterized in that, on the plane of the said sensor converter, the track of the collimator slot is substantially perpendicular to the said average direction of neutral particle propagation.

14. A device according to any preceding claim, characterized in that it includes a frame on which a plurality of sensors are mounted.

15. A device according to claim 14, characterized in that the sensors are disposed in a staggered configuration on the frame so that their respective converters when considered as a whole intercept the entire flat beam of neutral particles from the source.

16. A device according to claims 14 and 15, characterized in that the frame is enveloping in shape, e.g. L-shaped, U-shaped, or arcuate, with the source being disposed at a distance from the frame inside said enveloping shape.

17. A device according to any preceding claim, characterized in that the energy of the neutral particles used lies in the range 25 keV to 2 MeV.

18. A device according to claim 17, characterized in that the energy of the neutral particles used lies in the range 350 keV to 750 keV.

## Patentansprüche

1. Vorrichtung zur Erfassung und Lokalisierung von neutralen Teilchen wie X-Photonen, Gamma-Photonen oder Neutronen, die einem von einer Quelle (32) emittierten Fluß angehören und sich um eine mittlere Richtung in einem Raumöffnungswinkel ausbreiten, die durch einen Kollimator begrenzt ist, wobei diese Vorrichtung wenigstens einen Fühler (1) enthalt, der selbst wenigstens folgendes enthält:
- einen Wandler (2), der in der Lage ist, während des Aufschlagens von neutralen Teilchen, die er empfängt, ionisierende Teilchen zu emittieren, wobei dieser Wandler aus einem Festmaterial gebildet ist und sich in einer Ebene erstreckt,
- ein Gas, das den Wandler umgibt, und geeignet ist, elektrische Ladungen entstehen zu lassen, wenn es von ionisierenden Teilchen durchdrungen wird,
- Erfassungsmittel (3 bis 9), die längliche Leiter zum Sammeln von Ladungen enthalten, die zueinander im wesentlichen parallel und in einem im wesentlichen ebenen Netz vorgesehen sind, das parallel zu der Ebene des Wandlers ist, und die geeignet sind, die Ladungen einzusammeln, die durch stimulierte Ionisation erzeugt werden,
- Polarisationsmittel zum Anlegen einer Potentialdifferenz zwischen den Wandler und die länglichen Leiter, um eine Vervielfältigung der Ladungen durch ihre Beschleunigung in dem so erzeugten Feld zu bewirken, was zu einer stimulierten Ionisierung des Gases führt,
- eine Einfassung (18), die für die neutralen Teilchen durchlässige ist und den Wandler, das Gas und die Erfassungsmittel einschließt, und
- elektronische Schaltungen, die mit den länglichen Leitern zum Sammeln von Ladungen verbunden sind, um ein Bild zu erzeugen, das repräsentativ ist für die Verteilung der Ladungen auf den länglichen Sammelleitern, mit denen diese Schaltungen verbunden sind,
dadurch gekennzeichnet, daß der Kollimator den Strahl von Teilchen, die von der Quelle empfangen werden, auf einen flächigen Strahl (23) begrenzt, der mittig auf die mittlere Ausbreitungsrichtung eingestellt ist, daß die Ebene des Wandlers mit dieser mittleren Ausbreitungsrichtung einen Winkel (Alpha) bildet, der kleiner als 10° ist, daß die Leiter zum Sammeln von Ladungen zu der Projektion der mittleren Ausbreitungsrichtung in der Ebene des Wandlers im wesentlichen parallel ist, daß die elektronischen Schaltungen voneinander unabhängig sind, und daß jede dieser elektronischen Schaltungen mit einem betreffenden Leiter zum Sammeln von Ladungen oder einem betreffenden Paar von Leitern zum Sammeln von Ladungen verbunden ist, die beiderseits der Ebene des Wandlers und einander gegenüberliegend auf der Senkrechten bezüglich dieser Ebene angeordnet sind, und dazu dient, einen der Pixel einer Reihe von Pixeln zu bilden, die ein eindimensionales Bild bilden, das für die Vertretung der Flußstärke von neutralen Teilchen gemäß einer Richtung (26) repräsentativ ist, die zu der Ebene des Wandlers parallel und zu der mittleren Ausbreitungsrichtung der neutralen Teilchen senkrecht ist.

2. Vorrichtung zur Erfassung und Lokalisierung von neutralen Teilchen wie X-Photonen, Gamma-Photonen oder Neutronen, die einem Fluß angehören, der von einer Quelle (32) emittiert wird, und sich um eine mittlere Richtung in einem Raumöffnungswinkel ausbreiten, die durch einen Kollimator begrenzt ist, wobei diese Vorrichtung wenigstens einen Fühler (1) enthält, der selbst wenigstens folgendes enthält:
- einen Wandler (2), der geeignet ist, während des Aufschlagens der neutralen Teilchen, die er empfängt, ionisierende Teilchen zu emittieren, wobei dieser Wandler aus einem Festmaterial gebildet ist und sich in einer Ebene erstreckt,
- ein Gas, das den Wandler umgibt und geeignet ist, elektrische Ladungen entstehen zu lassen, wenn es von den ionisierenden Teilchen durchdrungen wird,
- Erfassungsmittel (3 bis 9) mit länglichen Leitern zum Sammeln von Ladungen, die zueinander im wesentlichen parallel und in einem im wesentlichen ebenen Netz vorgesehen sind, das parallel zu der Ebene des Wandlers ist, und die geeignet sind, die Ladungen einzusammeln, die durch stimulierte Ionisierung erzeugt werden,
- Polarisationsmittel zum Anlegen einer Potentialdifferenz zwischen den Wandler und die länglichen Leiter, um eine Vervielfältigung der Ladungen durch ihre Beschleunigung in dem so erzeugten Feld zu bewirken, was zu einer stimulierten Ionisierung des Gases führt,
- eine Einfassung (18), die für die neutralen Teilchen durchlässig ist und den Wandler, das Gas und die Erfassungsmittel einschließt, und
- elektronische Schaltungen, die mit den länglichen Leitern zum Sammeln von Ladungen verbunden sind, um ein Bild zu erzeugen, das repräsentativ ist für die Verteilung der Ladungen auf den länglichen Sammelleitern, mit denen diese Schaltungen verbunden sind,
dadurch gekennzeichnet, daß daß der Kollimator den Strahl von Teilchen, die von der Quelle empfangen werden, auf einen flächigen Strahl (23) begrenzt, der mittig auf die mittlere Ausbreitungsrichtung eingestellt ist, daß die Ebene des Wandlers mit dieser mittleren Ausbreitungsrichtung einen Winkel (Alpha) bildet, der kleiner als 10° ist, daß diese Leiter zum Sammeln von Ladungen von der Art eines Widerstands sind, im wesentlichen senkrecht zu der Projektion der mittleren Ausbreitungsrichtung auf die Ebene des Wandlers sind und mit ihren Enden mit zwei betreffenden elektronischen Schaltungen verbunden sind, denen sie betreffende Ströme liefern, womit diesen Schaltungen auf an sich bekannte Weise die Lokalisierung der Ladungen entlang dieser Leiter zum Sammeln der Ladungen ermöglicht wird, wobei das Bidl nun durch ein eindimensionales Bild gebildet ist, das repräsentativ ist für die Aufteilung der Flußstärke von neutralen Teilchen gemäß einer Richtung (26), die parallel zu der Ebene des Wandlers und senkrecht zu der mittleren Ausbreitungsrichtung der neutralen Teilchen ist.

3. Vorrichtung nach einem der vorhergehenden Ansprüche, dadurch gekennzeichnet, daß der Wandler ein Material enthält, dessen Ordnungszahl wenigstens gleich 25 ist.

4. Vorrichtung nach einem der vorhergehenden Ansprüche, dadurch gekennzeichnet, daß der Wandler ein Material enthält, das einen Wirkungsquerschnitt einer Wechselwirkung mit den neutralen Teilchen von wenigstens gleich 1 Millbarn besitzt.

5. Vorrichtung nach einem der vorhergehenden Ansprüche, dadudrch gekennzeichnet, daß der Wandler eine Dicke von höchstens gleich 2 Millimetern besitzt und mit der mittleren Richtung des Flusses von neutralen Teilchen einen Winkel von höchstens 5° bildet.

6. Vorrichtung nach einem der vorhergehenden Ansprüche, dadurch gekennzeichnet, daß der Wandler eine Tantalplatte ist, deren Dicke höchstens gleich 200 Mikrometer beträgt und die mit der mittleren Richtung des Flusses einen Winkel von höchstens gleich 2° bildet.

7. Vorrichtung nach einem der vorhergehenden Ansprüche, dadurch gekennzeichnet, daß der Abstand zwischen zwei benachbarten Drähten und der Abstand zwischen einem jeweiligen Draht und dem Wandler kleiner als 15 Millimeter sind.

8. Vorrichtung nach einem der vorhergehenden Ansprüche, dadurch gekennzeichnet, daß die Erfassungsmittel u.a. wenigstens eine ebene Zusatzelektrode enthalten, die im wesentlichen auf dem gleichen elektrischen Potential wie der Wandler gehalten und parallel zu diesem und auf der anderen Seite des Drahtnetzes als dieser angeordnet ist.

9. Vorrichtung nach Anspruch 8, dadurch gekennzeichnet, daß die Erfassungsmittel ein Drahtnetz und eine Zusatzelektrode auf jeder Seite des Wandlers enthalten.

10. Vorrichtung nach einem der vorhergehenden Ansprüche, dadurch gekennzeichnet, daß der Gasdruck in der Einfassung kleiner als 10⁶ Pascal ist.

11. Vorrichtung nach Anspruch 10, daß die Potentialdifferenz, die durch die elektrischen Polarisationsmittel angelegt wird, kleiner als 30 kV ist.

12. Vorrichtung nach einem der vorhergehenden Ansprüche, dadurch gekennzeichnet, daß sie einen Träger enthält, der den Wandler und die Erfassungsmittel entsprechend einer Neigung hält, die bezüglich einer Bezugsachse markiert ist, die mit der Außenform der Einfassung verbunden ist und es ermöglicht, die gewünschte orientierung des Wandlers gegenüber der mittleren Richtung des Flusses von neutralen Teilchen zu erhalten, indem diese Bezugsachse in diese Richtung orientiert wird.

13. Vorrichtung nach einem der vorhergehenden Ansprüche, dadurch gekennzeichnet, daß der Kollimator einen Schlitz aufweist, dessen Spur in der Ebene des Wandlers des Fühlers im wesentlichen senkrecht zu der mittleren Richtung des Flusses von neutralen Teilchen ist.

14. Vorrichtung nach einem der vorhergehenden Ansprüche, dadurch gekennzeichnet, daß sie ein Tragelement enthält, an dem mehrere Fühler angebracht sind.

15. Vorrichtung nach Anspruch 14, dadurch gekennzeichnet, daß die Fühler derart versetzt auf dem Tragelement angeordnet sind, daß ihre betreffenden Wandler, die in ihrer Einheit betrachtet werden, einen von der Quelle stammenden flächigen Strahl von neutralen Teilchen vollständig erfassen.

16. Verfahren nach den Ansprüchen 14 und 15, dadurch gekennzeichnet, daß das Tragelement eine umhüllende Form wie die eines L, eines U oder eines Kreisbogen annimmt, wobei die Quelle in einem Abstand von dem Tragelement im Innern dieser umhüllenden Form angeordnet ist.

17. Vorrichtung nach einem der vorhergehenden Ansprüche, dadurch gekennzeichnet, daß die Energie der verwendeten neutralen Teilchen zwischen 250 keV und 2 MeV liegt.

18. Vorrichtung nach Anspruch 17, dadurch gekennzeichnet, daß die Energie der verwendeten neutralen Teilchen zwischen 350 keV und 750 keV liegt.
